# NEUE EUROPÄISCHE PATENTSCHRIFT

(11) **EP 3 243 368 B2**
(45) Veröffentlichungstag und Bekanntmachung des Hinweises auf die Entscheidung über den Einspruch: **22.06.2022**
(45) Hinweis auf die Patenterteilung: 06.11.2019
(21) Anmeldenummer: 16203914.3
(22) Anmeldetag: 14.12.2016
(51) Int. Cl.: A01B 59/042

(54) **ZUGMASCHINEN- GERÄTE KOMBINATION MIT FAHRERASSISTENZSYSTEM**
TRACTION MACHINE DEVICE COMBINATION WITH DRIVER ASSISTANCE SYSTEM
COMBINAISON D'APPAREIL DE VÉHICULE DE TRACTION AYANT UN SYSTÈME D'ASSISTANCE AU CONDUCTEUR

(30) Priorität: 10.05.2016 DE 102016108590; 27.09.2016 DE 102016118205
(43) Veröffentlichungstag der Anmeldung: 15.11.2017
(73) Patentinhaber: CLAAS Tractor S.A.S., 78141 Vélizy-Villacoublay Cedex (FR)
(72) Erfinder: Clement, Majorie, 27810 Marcilly sur Eure (FR); De Wever, Geoffrey, 27250 Bois-Arnault (FR); Nivot, Xavier, 92350 Le Plessis Robinson (FR); Villette, Clement, 92190 Meudon (FR); Dirlewanger, Florian, 88348 Bad Saulgau (DE); Glitz, Thinus, 33014 Bad Driburg (DE)
(74) Vertreter: CLAAS Gruppe

(56) Entgegenhaltungen:
- EP-A1- 1 321 017
- EP-A1- 1 532 872
- EP-A1- 2 434 133
- EP-A1- 2 462 794
- EP-A1- 2 936 969
- EP-A2- 0 838 141
- EP-A2- 0 870 654
- EP-A2- 2 401 904
- DE-A1- 4 239 530
- DE-A1-102005 005 557
- DE-A1-102014 113 466
- DE-U1- 29 811 468
- DE-U1-202016 100 346
- US-A1- 2014 172 247
- US-A1- 2014 195 126

## Beschreibung

Die Erfindung betrifft eine Zugmaschinen - Geräte - Kombination welche ein Fahrerassistenzsystem umfasst, das eingerichtet ist eine Optimierung des Zugmaschinenbetriebes für sich genommen oder der Kombination aus Zugmaschine und Gerät zu ermöglichen gemäß dem Oberbegriff des Anspruchs 1.

Zugmaschinen für sich genommen und die Kombination aus Zugmaschinen und Anbaugeräten, wie beispielsweise Transportanhängern, Ladewagen, Schwadern, Wendern, Mähwerken, Ballenpressen, Bodenbearbeitungsgeräten, Pflanzenschutzspritzen und Düngerstreuern sind hochkomplexe und kostenintensive Systeme. Daher ist es von großer Bedeutung, dass derartige Systeme effizient betrieben werden.

Üblicher Weise ist es heute so, dass die Zugmaschine und das an sie adaptierte Anbaugerät häufig unabhängig voneinander und an verschiedenen Stellen optimiert werden. Zudem wird nicht überprüft, ob die für die Zugmaschine und das Anbaugerät gefundenen optimierten Parameter auch zu einer Optimierung des Betriebs der Kombination aus Zugmaschine und dem jeweiligen Anbaugerät führt. Die voneinander getrennte Optimierung der Arbeitsweise der Zugmaschine und dem ihr zugeordneten Anbaugerät erfordert zudem ein hohes Spezialwissen des Zugmaschinenfahrers, da er die wesentlichen Einstellungen wie etwa Motor-, Getriebe- und Fahrwerkseinstellungen an der Zugmaschine und Grundeinstellungen am Anbaugerät selbst vornehmen muss, wobei die Maschinen selbst oder die jeweils verfügbaren Bedienungsanleitungen diesen Prozess nur teilweise unterstützen.

Aus der EP 0 838 141 ist beispielsweise ein System bekannt geworden, bei dem das als Pflug ausgeführte Bodenbearbeitungsgerät mit einem Jobrechner ausgestattet ist, der über ein Bussystem mit der Bedien- und Anzeigeeinheit der als Traktor ausgeführten Zugmaschine gekoppelt ist. Der Traktorfahrer kann nun über die Bedien- und Anzeigeeinheit Einstellparameter für den Pflug vorgeben. Bereits an diesem Bespiel ist gut zu erkennen, wie umfangreich das Spezialwissen des Bedieners sein muss, da bei derartigen Systemen vom Bediener gefordert wird Einstellparameter sowohl für das Zugfahrzeug als auch das Anbaugerät vorzugeben.

Es ist deshalb Aufgabe der Erfindung die beschriebenen Nachteile des Standes der Technik zu vermeiden und insbesondere ein Fahrerassistenzsystem vorzuschlagen, dass die komplexen Zusammenhänge bei der Einstellungsoptimierung einer Zugmaschine und eines adaptierten Anbaugerätes besser erfasst und berücksichtigt, sodass die Einstellungsoptimierung der Zugmaschine und des jeweiligen Anbaugerätes jeweils für sich genommen und in Kombination effektiviert und beschleunigt wird.

Diese Aufgabe wird erfindungsgemäß durch die kennzeichnenden Merkmale des Anspruchs 1 gelöst.

Indem die Landwirtschaftliche Maschinenanordnung zumindest eine Zugmaschine und zumindest ein an die Zugmaschine adaptiertes Anbaugerät umfassend mit einem den Betrieb der Zugmaschine und/oder des jeweiligen Anbaugerätes optimierenden Fahrerassistenzsystem, welches über eine Recheneinheit und zumindest eine Anzeigeeinheit verfügt, wobei die Recheneinheit von maschineninternen Sensorsystemen generierte Informationen, externe Informationen und in der Recheneinheit hinterlegbare Informationen verarbeitet und wobei die Zugmaschine und das zumindest eine Anbaugerät eine Steuervorrichtung zur Steuerung und Regelung der Zugmaschine und/oder des Anbaugerätes umfassen, wobei das Anbaugerät als Bodenbearbeitungsgerät ausgeführt ist und das Fahrerassistenzsystem so strukturiert ist, dass es einen Zugmaschineneinstellautomaten und einen Anbaugeräteinstellautomaten bildet und die jeweiligen Einstellautomaten unabhängig voneinander oder in Abhängigkeit voneinander eine Optimierung der Arbeitsweise der Zugmaschine und/oder des zumindest einen Bodenbearbeitungsgerätes bewirken, wobei der jeweilige Einstellautomat Steuersignale generiert, die einer jeweiligen Steuereinheit zugeführt werden und dort jeweils die Ansteuerung bestimmter Arbeitsorgane der Zugmaschine und des Anbaugerätes durch Generierung entsprechender Steuersignale bewirken und das Fahrerassistenzsystem auswählbare Optimierungsstrategien umfasst und die auswählbaren Optimierungsstrategien zugmaschinenspezifische Strategien, anbaugerätspezifische Strategien und/oder eine Kombination aus beiden sind, wird sichergestellt, dass die Einstelloptimierung einer Zugmaschine und des jeweiligen Anbaugerätes jeweils für sich genommen und in Kombination effektiviert und beschleunigt wird.

Eine besonders effiziente und optimal an bestimmte Arbeitsbedingungen angepasste Arbeitsweise einer Maschineanordnung wird in einer vorteilhaften Weiterbildung der Erfindung dann erreicht, wenn die Optimierung der Arbeitsweise der Zugmaschine und/oder des zumindest einen Bodenbearbeitungsgerätes in Abhängigkeit von der ausgewählten Optimierungsstrategie eine Optimierung von Arbeitsparametern der Zugmaschine und/oder des an die Zugmaschine adaptierten Bodenbearbeitungsgerätes umfasst

In einer vorteilhaften Ausgestaltung der Erfindung kann eine besonders effiziente Arbeitsweise eines Bodenbearbeitungsgerätes dann erreicht werden, wenn die auswählbaren Optimierungsstrategien eine oder mehrere der Optimierungsstrategien "Stoppelbearbeitung", "Power Hop", "Bodenlockerung", "Ebenheit", "Durchmischung", "Saatbettbereitung", "Krümelung" und "Rückverfestigung" umfassen.

Eine deutliche Verbesserung des Fahrkomforts sowie eine signifikante Reduzierung des belastungsbedingten Maschinenverschleißes kann in einer vorteilhaften Weiterbildung der Erfindung dann erreicht werden, wenn die auswählbare Optimierungsstrategie "Power Hop" das belastungsabhängige Aufschaukeln der Maschinenanordnung reduziert und die Arbeitsparameter einer oder mehrere der folgenden Parameter sind: Reifenluftdruck an einer Vorderachse, Reifenluftdruck an einer Hinterachse, Ballastierung.

Eine deutliche Verbesserung des Verrottungsverhaltens von Stoppeln wird in einer vorteilhaften Ausgestaltung der Erfindung dann erreicht, wenn die auswählbare Optimierungsstrategie "Stoppelbearbeitung" eine niedrige Stoppelhöhe bewirkt und die Arbeitsparameter zumindest die Einstellung eines minimalen Abstandes der Werkzeuge zum Boden umfassen. Dies hat insbesondere die Effekte, dass die Ernterückstände zerkleinert und gut mit dem Boden durchmischt werden und zudem eine hohe Fahrgeschwindigkeit realisierbar ist.

Eine Verbesserung der Bodenstruktur, die letztlich die Luft- und Wasserdurchlässig des Bodens verbessert, wird in einer vorteilhaften Ausgestaltung der Erfindung dadurch erreicht, dass die auswählbare Optimierungsstrategie "Bodenlockerung" eine Auflockerung des Bodens bewirkt und die Arbeitsparameter zumindest die Eindringtiefe der Werkzeuge in den Boden und/oder die Arbeitsgeschwindigkeit und/oder den Reifendruck umfassen.

Indem die auswählbare Optimierungsstrategie "Ebenheit" eine Reduzierung von Bodenunebenheiten durch Vergleichmäßigung der Bodenoberflächenstruktur bewirkt und die Arbeitsparameter das Führen der Werkzeuge über den Boden, die Einstellung der Werkzeuge und die Arbeitsgeschwindigkeit umfassen wird zudem sichergestellt, dass sich der negative Effekt von Bodenunebenheiten in nachfolgenden Bodenbearbeitungsprozessen wie etwa dem Säen deutlich reduziert.

In einer vorteilhaften Weiterbildung der Erfindung ist vorgesehen, dass die auswählbare Optimierungsstrategie "Durchmischung" eine Optimierung der Durchmischung von Boden und Ernterückständen bewirkt und die Arbeitsparameter zumindest der sogenannte Stoppelsturz und die Arbeitstiefe sind.

In einer weiteren vorteilhaften Ausgestaltung der Erfindung ist vorgesehen, dass die auswählbare Optimierungsstrategie "Saatbettbereitung" eine Optimierung der Bodenstruktur für ein Saatbeet in Abhängigkeit von der auszusäenden Fruchtart bewirkt und die Arbeitsparameter zumindest die Krümelstruktur und/oder die Saatbetttiefe und/oder die Rückverfestigung des Bodens umfassen.

Indem die auswählbare Optimierungsstrategie "Krümelung" eine Optimierung der Bodenstruktur, insbesondere eine Bodentiefe-abhängige Größe der Bodenbestandteile bewirkt und wobei hier die Arbeitsparameter ebenfalls zumindest die Krümelstruktur und/oder die Saatbetttiefe und/oder die Rückverfestigung des Bodens umfassen, wird sichergestellt, dass der Boden auch in größeren Tiefen noch eine gute Luft- und Wasserdurchlässigkeit aufweist. Dieser Effekt wird auch dadurch noch verstärkt, dass in einer weiteren vorteilhaften Ausgestaltung der Erfindung die auswählbare Optimierungsstrategie "Rückverfestigung" eine Optimierung der Bodendichte in Abhängigkeit von der Bodentiefe bewirkt und der zumindest eine Arbeitsparameter die Rückverfestigung des Bodens umfasst.

Besonders wirksam kann die Effizienz einer Maschinenanordnung auch dann gesteigert werden, wenn die auswählbaren Optimierungsstrategien zusätzlich oder alternativ eine oder mehrere der Strategien "Effizienz", "Leistung", "Arbeitsqualität", "Balance", "Bodenschonung", "Komfort" und/oder "Benutzerdefiniert" umfasst. Dabei ist es von Vorteil, wenn die Optimierungsstrategie "Effizienz" den Maschinenkraftstoffverbrauch und/oder die Maschinenbetriebsstunden der Maschinenanordnung und/oder die für sogenannte Vorgewendemanöver benötigten Zeit optimiert;
die Optimierungsstrategie "Leistung" auf die Steigerung der bearbeiteten Fläche und/oder verarbeiteten Masse landwirtschaftlicher Güter und/oder der Betriebsstunden der Maschinenanordnung gerichtet ist;
die Optimierungsstrategie "Arbeitsqualität" die Optimierung von Einstellparametern der Zugmaschine und/oder des Bodenbearbeitungsgerätes bewirkt;
die Optimierungsstrategie "Balance" die Einstellung eines variablen Verhältnisses zwischen "Leistung" und "Effizienz" ermöglicht;
die Optimierungsstrategie "Bodenschonung" den von der Maschinenanordnung verursachten Bodendruck und/oder die Bodenverdichtung reduziert und/oder den Reifenluftdruck, die Ballastierung und das Gewicht der Maschinenanordnung, die Art der Bereifungen, den Lenkmodus und/oder den Fahrwerkschlupf optimiert;
die Optimierungsstrategie "Komfort" eine benutzerdefinierte Einstellung des Schwingverhaltens und/oder Beschleunigungsverhalten und/oder der Lautstärke der Maschinenanordnung bewirkt;
die Optimierungsstrategie "Benutzerdefiniert" das manuelle Verstellen der in den Strategien hinterlegten Parameter ermöglicht.

In einer vorteilhaften Ausgestaltung der Erfindung ist das Fahrerassistenzsystem so beschaffen, dass der Zugmaschineneinstellautomat und der Anbaugeräteinstellautomat einen gemeinsamen Einstellautomaten bilden. Dies hat den Effekt, dass der Betrieb auch sehr komplexer Maschinenanordnungen mit ein und demselben Fahrerassistenzsystem optimiert werden kann.

Indem das Fahrerassistenzsystem ein dem Zugmaschineneinstellautomaten zugeordnetes Regelwerk umfasst und das dem Zugmaschineneinstellautomaten zugeordnete Regelwerk eine Optimierung der Arbeitsweise der Zugmaschine unabhängig von der Arbeitsweise des Anbaugerätes bewirkt wird erreicht, dass auch die Basiseinstellungen einer Zugmaschine für sich genommen mit dem erfindungsgemäßen Fahrerassistenzsystem optimerbar sind. In diesem Zusammenhang ist es von Vorteil, wenn das dem Zugmaschineneinstellautomaten zugeordnete Regelwerk ein Regelwerk zur Optimierung der Arbeitsweise des Anbaugerätes umfasst, wobei das Fahrerassistenzsystem die Arbeitsweise der Zugmaschine und/oder des Anbaugerätes optimiert. Eine derartige Struktur hat den Effekt, dass das Fahrerassistenzsystem auch ohne konkrete Kenntnisse über die Struktur eines bestimmten Anbaugerätes dessen Betrieb auf der Grundlage allgemeingültiger Zusammenhänge optimieren kann. Die Optimierung des Betriebs eines Anbaugerätes mittels des erfindungsgemäßen Fahrerassistenzsystems wird in diesem Zusammenhang auch dann erheblich effektiviert, wenn das Regelwerk zur Optimierung der Arbeitsweise des Anbaugerätes auf im Zugmaschineneinstellautomaten hinterlegten oder auf einem von dem jeweiligen Anbaugerät bereitgestellten Regelwerk basiert.

Eine hochflexible Struktur des erfindungsgemäßen Fahrerassistenzsystems ergibt sich dann, wenn das Regelwerk zur Optimierung der Arbeitsweise des Bodenbearbeitungsgerätes in einer der Zugmaschine zugeordneten, vorzugsweise als Jobrechner ausgeführten Steuervorrichtung oder einer dem Bodenbearbeitungsgerät zugeordneten, vorzugsweise als Jobrechner ausgeführten Steuereinrichtung hinterlegt ist und die Zugmaschine und das zumindest eine an diesem adaptierte Bodenbearbeitungsgerät ISO-basierte Steuereinrichtungen umfassen und das Fahrerassistenzsystem die von den Steuereinrichtungen gebildeten Einstellautomaten als Supervisor steuert, sodass sich eine Optimierung des gesamten Arbeitsprozesses einstellt.

In einer vorteilhaften Weiterbildung der Erfindung umfasst das Fahrerassistenzsystem einen Modul "Einsatzzweck", indem vom Bediener dialoggeführt ein Einsatzzweck bestimmt wird und wobei das Modul "Einsatzzweck" einen oder mehrere der Einsatzzwecke "Bodenbearbeitung", "Zapfwellenarbeit", "Transportarbeit" und "Frontladearbeit" umfassen kann und insbesondere die vom Bediener im Modul "Einsatzzweck"definierten Parameter und die nach Abarbeitung einer Optimierungsstrategie generierten Arbeitsparameter als separate oder gemeinsamer Ergebnisdatensatz gespeichert werden und der oder die Datensätze wiederholt abrufbar und editierbar sind, wobei der oder die Datensätze insbesondere personalisiert speicherbar und wiederabrufbar sind. Dies hat vor allem den Effekt, dass die Optimierung von Parametern auf diejenigen Parameter beschränkt bleibt, die für den jeweiligen Einsatzzweck von Bedeutung sind und die für einen bestimmten Einsatzzweck standardisierten Parameter bereits vorab festlegbar sind. Insgesamt führt dies dazu, dass sich der Optimierungsprozess beschleunigt. Zudem verbessern sich die Reproduzierbarkeit und die Individualisierung der mit dem Fahrerassistenzsystem optimierten Prozessparameter.

Zudem kann der Betrieb einer Maschinenanordnung auch dadurch weiter optimiert werden, dass der oder die speicherbaren Datensätze spezifische Datensätze für "Arbeiten auf Feld" und "Straßenfahrt" umfassen und die spezifischen Datensätze für "Arbeiten auf Feld" und "Straßenfahrt" direkt abrufbar sind.

Neben der Geschwindigkeit des Optimierungsprozesses kann auch die Akzeptanz einer Fahrerassistenzsystem-basierten Einsatzoptimierung dadurch gesteigert werden, dass der Dialog zwischen Fahrerassistenzsystem und Bediener natürlichsprachig erfolgt.

In einer vorteilhaften Weiterbildung der Erfindung umfasst der Dialog zwischen Fahrerassistenzsystem und Bediener zumindest die Schritte:
a) Aktivierung des Fahrerassistenzsystems durch den Bediener oder automatisch bei Identifikation einer kritischen Situation
b.) Aktivierung Modul "Einsatzzweck", wobei der Bediener die Editierung des Einsatzzwecks bewirkt
c.) Aktivierung eines Moduls "Feld/Straße", wobei der Bediener den Einsatz "Feld" oder "Straße" vorgibt oder das Fahrerassistenzsystem (6) den Einsatz selbsttätig erkennt
d.) Start des Moduls "Optimierung", wobei der Bediener zur Auswahl der Optimierungsstrategie aufgefordert wird
e.) in Abhängigkeit von der ausgewählten Optimierungsstrategie Aktivierung einer dialoggeführten Optimierung von Arbeitsparametern der Zugmaschine und/oder des an die Zugmaschine adaptierten Bodenbearbeitungsgerätes.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine schematische Darstellung der erfindungsgemäßen Maschinenanordnung
- Figur 2: eine Detailansicht des erfindungsgemäßen Fahrerassistenzsystems
- Figur 3: ein Flussbild des Verfahrens nach dem das erfindungsgemäße Fahrerassistenzsystem arbeitet
- Figur 4: eine Detailansicht des erfindungsgemäßen Fahrerassistenzsystems nach den Figuren 2 und 3.
- Figur 5: eine Detailansicht des erfindungsgemäßen Fahrerassistenzsystems nach den Figur 4

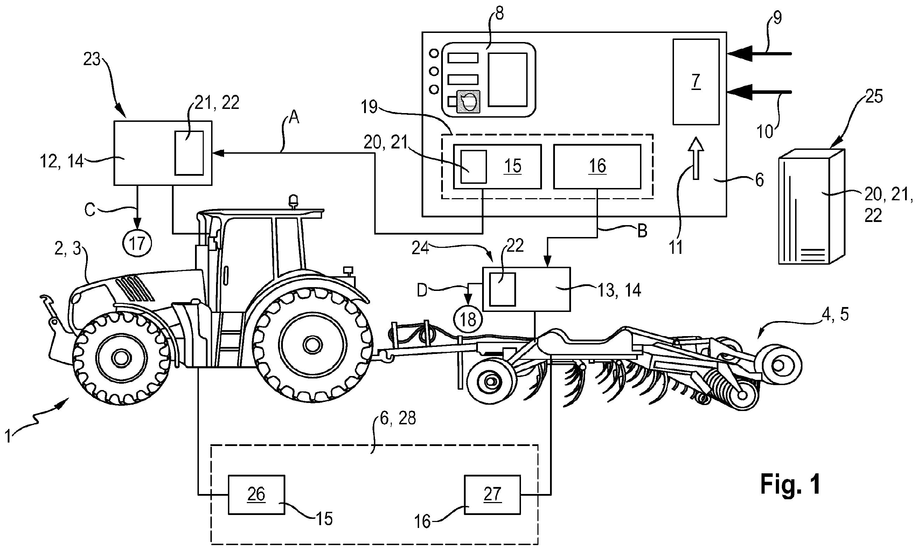

Die in Fig. 1 dargestellte landwirtschaftliche Maschinenanordnung 1 umfasst eine als Traktor 2 ausgeführte Zugmaschine 3 und zumindest ein an die Zugmaschine 3 adaptiertes, als Bodenbearbeitungsgerät 4 - hier als sogenannter Grubberausgeführtes Anbaugerät 5. Es liegt im Rahmen der Erfindung, dass das Anbaugerät 5 als beliebiges Anbaugerät, wie etwa als Transportanhänger, Ladewagen, Schwader, Wender, Mähwerk, Ballenpresse, sonstiges Bodenbearbeitungsgeräte, etwa als Pflug, Pflanzenschutzspritze oder Düngerstreuer ausgeführt ist. In noch näher zu beschreibender Weise ist der Maschinenanordnung 1 das erfindungsgemäße, den Betrieb der Zugmaschine 3 und/oder des jeweiligen Anbaugerätes 5 optimierende Fahrerassistenzsystem 6 zugeordnet. Das erfindungsgemäße Fahrerassistenzsystem 6 umfasst zumindest eine Recheneinheit 7 und eine Anzeigeneinheit 8, wobei die Recheneinheit 7 von maschineninternen Sensorsystemen generierte Informationen 9, externe Informationen 10 und in der Recheneinheit 7 hinterlegbare Informationen 11 verarbeitet. Zudem sind der Zugmaschine 3 und dem Anbaugerät 5 ein oder mehrere Steuervorrichtungen 12, 13 zur Steuerung und Regelung der Zugmaschine 3 und/oder des jeweiligen Anbaugerätes 5 zugeordnet. Es liegt im Rahmen der Erfindung, dass der Zugmaschine 3 und dem Anbaugerät 5 separate Steuereinrichtungen 12, 13 zur Ansteuerung der verschiedensten Arbeitsorgane zugeordnet sind. Es liegt im Rahmen der Erfindung, dass die Anzeigeneinheit 8 auch mobil ausgestaltet sein kann, sodass sie vom Bediener der Maschinenanordnung 1 mitführbar ist.

Erfindungsgemäß ist das Fahrerassistenzsystem 6 so strukturiert ist, dass es einen Zugmaschineneinstellautomaten 15 und einen Anbaugeräteinstellautomaten 16 bildet wobei die jeweiligen Einstellautomaten 15, 16 unabhängig voneinander oder in Abhängigkeit voneinander eine Optimierung der Arbeitsweise der Zugmaschine 3 und des zumindest einen Anbaugerätes 5 bewirken. Erfindungsgemäß wird dies dadurch bewirkt, dass der jeweilige Einstellautomat 15, 16 Steuersignale A, B generiert, die der jeweiligen Steuereinheit 12, 13 zugeführt werden und dort jeweils die Ansteuerung bestimmter Arbeitsorgane 17, 18 der Zugmaschine 3 und des Anbaugerätes 5 durch Generierung entsprechender Steuersignale C, D bewirken.

Das Fahrerassistenzsystem 6 kann zudem so beschaffen sein, dass der Zugmaschineneinstellautomat 15 und der Anbaugeräteinstellautomat 16 einen gemeinsamen Einstellautomaten 19 bilden. Zudem kann das Fahrerassistenzsystem 6 ein dem Zugmaschineneinstellautomaten 15 zugeordnetes Regelwerk 20 umfassen welches eine Optimierung der Arbeitsweise der Zugmaschine 3 unabhängig von der Arbeitsweise des Anbaugerätes 5 bewirkt. In einer einfachen Ausgestaltungsvariante kann das dem Zugmaschineneinstellautomaten 15 zugeordnete Regelwerk 20 ein Regelwerk 21 zur Optimierung der Arbeitsweise des Anbaugerätes 5 umfassen, sodass das Fahrerassistenzsystem 6 die Arbeitsweise der Zugmaschine 3 und des Anbaugerätes 5 optimiert. Das Regelwerk 21 zur Optimierung der Arbeitsweise des Anbaugerätes 5 kann neben der unmittelbaren Hinterlegung im Zugmaschineneinstellautomaten 15 auch von dem jeweiligen Anbaugerät 5 als externes Regelwerk 22 bereitgestellt werden. Weiter liegt es im Rahmen der Erfindung, dass das Regelwerk 21, 22 zur Optimierung der Arbeitsweise des Anbaugerätes 5 in einer der Zugmaschine 3 zugeordneten, vorzugsweise als Jobrechner 23 ausgeführten Steuervorrichtung 12 oder einer dem Anbaugerät 5 zugeordneten, vorzugsweise ebenfalls als Jobrechner 24 ausgeführten Steuervorrichtung 13 hinterlegt ist. Es liegt zudem im Rahmen der Erfindung, dass die benötigten Regelwerke 20-22 auch zentral auf einem nicht näher erläuterten Server 25 hinterlegt sind.

Sind in einer vorteilhaften Ausgestaltung der Erfindung der Zugmaschine 3 und dem zumindest einen adaptierten Anbaugerät 5 ISO-basierte, als Jobrechner ausgeführte Steuereinrichtungen 26, 27 zugeordnet kann das erfindungsgemäße Fahrerassistenzsystem 6 die von den Steuereinrichtungen 26, 27 gebildeten Einstellautomaten 15, 16 als Supervisor 28 steuern, sodass sich eine Optimierung des gesamten Arbeitsprozesses einstellt.

Indem das erfindungsgemäße Fahrerassistenzsystem 6 so beschaffen ist, dass es einen Zugmaschineneinstellautomaten 15 und/oder einen Anbaugeräteautomaten 16 umfasst, die entweder unabhängig voneinander agieren oder in einem gemeinsamen Einstellautomaten 19 zusammengefasst sind, der dann in einer bevorzugten Ausgestaltung als Supervisor 28 arbeitet wird ein hochflexibles Assistenzsystem zur Optimierung einer landwirtschaftlichen Maschinenanordnung 1 geschaffen. Ein derart strukturiertes Fahrerassistenzsystem 6 schafft die Möglichkeit der Zugmaschine 3 einen Zugmaschineneinstellautomaten 15 zuzuordnen, der unabhängig von einem zu adaptierenden Anbaugerät 5 ausschließlich den Betrieb der Zugmaschine 3 optimiert. Indem der Zugmaschineneinstellautomat 15 neben dem die Optimierung der Zugmaschine 3 umfassenden Regelwerk 20 auch ein Regelwerk 21 zur Optimierung des Betriebes des Anbaugerätes 5 umfasst, ist das Fahrerassistenzsystem 6 in der Lage sowohl den Betrieb der Zugmaschine 3 alsauch des Anbaugerätes 5 zu optimieren. Das, die Optimierung des Anbaugerätes 5 bewirkende Regelwerk 21 kann dabei so strukturiert sein, dass es ein Basisregelwerk umfasst, welches unabhängig vom Anbaugerät 5 stets im Fahrerassistenzsystem 6 hinterlegt ist. In einer Ausbaustufe kann das Regelwerk 22 zur Optimierung des Betriebes des jeweiligen Anbaugerätes 5 von dem Anbaugerät 5 selbst an das Fahrerassistenzsystem 6 übergeben werden. Dies hat den Vorteil, dass das Regelwerk 22 sehr viel spezieller die Bedürfnisse, die optimalen Arbeitsbedingungen, des konkreten Anbaugerätes 5 definieren kann. Verfügen sowohl das Anbaugerät 5 als auch die Zugmaschine 3 über als Jobrechner 23, 24 ausgeführte Steuervorrichtungen 12, 13 so können die Steuereinrichtungen 12, 13 als sogenannte ISO-basierte Steuereinrichtungen 26, 27 ausgeführt sein, die jeweils das zugmaschinenbezogene und das anbaugerätbezogene Regelwerk 20, 22 umfassen, sodass das Fahrerassistenzsystem 6 die Einstellautomaten 15, 16 als Supervisor 28 steuert. Dies hat insbesondere den Effekt, dass der Arbeitsbetrieb der gesamten Maschinenanordnung unter Berücksichtigung einer großen Anzahl komplexer Zusammenhänge zwischen Zugmaschine 3 und einem oder mehreren adaptierten Anbaugeräten optimierbar wird.

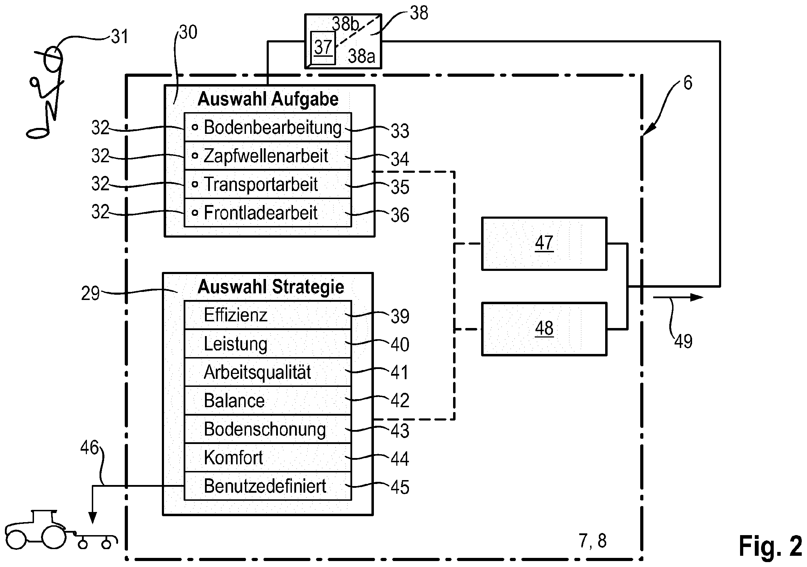

Figur 2 zeigt eine schematische Darstellung des erfindungsgemäßen Fahrerassistenzsystems 6, wobei hier Visualisierungs-, Bedien- und strukturelle Aspekt in ein und derselben Darstellung zusammengefasst sind. Das Fahrerassistenzsystem 6 umfasst einen Modul "Einsatzzweck" 30 in dem vom Bediener 31 dialoggeführt ein Einsatzzweck 32 bestimmt wird, wobei der Bediener 31 den Einsatzzweck vorab, etwa auf dem Hof bestimmen kann. Im dargestellten Ausführungsbeispiel umfasst das Modul "Einsatzzweck" 30 einen oder mehrere der Einsatzzwecke "Bodenbearbeitung" 33, "Zapfwellenarbeit" 34, "Transportarbeit" 35 und "Frontladearbeit" 36. Die vom Bediener 31 im Modul "Einsatzzweck" 30 definierten und noch näher zu beschreibenden Arbeitsparameter 37 werden als Datensatz 38 gespeichert. Der Datensatz 38 kann dabei einen Basisdatensatz 38a und einen kundenspezifischen Datensatz 38b umfassen, wobei der Basisdatensatz all diejenigen Daten umfasst, die vom Bediener nicht zwingend spezifisch editiert werden müssen und für die vom Bediener im Modul "Einsatzzweck" 30 gewählte Aufgabe allgemeingültig und damit vordefiniert hinterlegt sind.

Der im Modul "Einsatzzweck" 30 generierte Datensatz 38 ist wiederholt abruf- und editierbar gespeichert. Der Datensatz 38 kann entweder zentral auf einem Server 25 oder dezentral auf der Zugmaschine 3 und/oder dem Anbaugerät 5 oder einem flexiblem Speichermedium wie etwa einer Memory Card oder einem USB-Stick hinterlegt sein. Es liegt in diesem Zusammenhang im Rahmen der Erfindung, dass der oder die speicherbaren Datensätze 38 entweder personifiziert oder frei zugänglich, und damit zwischen verschiedenen Bedienern 31 unterschiedlichster Maschinenanordnungen 1 austauschbar gespeichert werden.

Zur Optimierung der Arbeitsweise der Zugmaschine 3 und/oder des an ihr adaptierten Anbaugerätes 5 umfasst das erfindungsgemäße Fahrerassistenzsystem 6 zudem noch näher zu erläuternde auswählbare Strategien 29, wobei die auswählbaren Strategien 29 zugmaschinenspezifische Strategien, anbaugerätspezifische Strategien und/oder eine Kombination aus beiden sind.

Eine effiziente Optimierung der aus Zugmaschine 3 und adaptierten Anbaugerät 5 bestehenden Maschinenanordnung 1 ergibt sich dann, wenn die auswählbaren Strategien 29 zumindest eine oder mehrere der Strategien "Effizienz" 39, "Leistung" 40, "Arbeitsqualität" 41, "Balance" 42, "Bodenschonung" 43 "Komfort" 44 und "Benutzerdefiniert" 45 umfassen.

Die Optimierungsstrategie "Effizienz" 39 kann dabei Maschinenkraftstoffverbrauch und Maschinenbetriebsstunden optimieren und/oder die Optimierung der für sogenannte Vorgewendemanöver benötigten Zeit umfassen.

Die Optimierungsstrategie "Leistung" 40 ist in einer vorteilhaften Ausgestaltung zumindest auf die Steigerung der bearbeiteten Fläche und/oder verarbeiteten Masse landwirtschaftliche Güter und/oder der Maschinenbetriebsstunden gerichtet.

Innerhalb der Optimierungsstrategie "Arbeitsqualität" 41 wird zumindest die Optimierung noch näher zu beschreibender Einstellparameter 46 der Zugmaschine 3 und/oder des Anbaugerätes 5 vorgenommen, um ein gewünschtes, von der Art des Anbaugerätes 5 abhängiges Arbeitsergebnis zu erreichen.

Die Optimierungsstrategie "Balance" 42 ist so beschaffen, dass ein variables Verhältnis zwischen "Leistung" 40 und "Effizienz" 39 einstellbar ist.

Die Optimierungsstrategie "Bodenschonung" 43 ist auf die Auswirkungen der Arbeit der Maschinenanordnung 1 auf den Boden gerichtet und optimiert Einstellparameter 46 der Zugmaschine 3 und des Anbaugerätes 5 so, dass sich eine bodenschonende Arbeitsweise ergibt. Besonders effektvoll ist diese Optimierungsstrategie, wenn etwa eine Minimierung des Bodendrucks und die damit verbundenen Bodenverdichtungsreduzierung, eine Optimierung des Reifenluftdrucks, eine ausgewogene Ballastierung und damit eine Gewichtsminimierung sowie optimierte Bereifungen, Lenkmodi und eine Minimierung des Fahrwerkschlupfs berücksichtigt oder erreicht werden.

Die Optimierungsstrategie "Komfort" 44 ist im einfachsten Falle so beschaffen, dass ein benutzerdefiniertes Schwingverhalten und/oder Beschleunigungsverhalten und/oder die Lautstärke der Maschinenanordnung 1 einstellbar ist.

Die Optimierungsstrategie "Benutzerdefiniert" 45 ermöglicht dem Bediener 31 das manuelle verstellen der in den Optimierungsstrategien 29 hinterlegten Parameter, sodass Wechselwirkungen und Abhängigkeiten zwischen den Strategien 29 besser berücksichtigt werden können.

Das Fahrerassistenzsystem 6 ist zudem so beschaffen, dass es entweder in einem Dialogmodus 47 mit dem Bediener 31 oder in einem Automatikmodus 48 betrieben werden kann. In beiden Fällen findet die Kommunikation, der Dialog mit dem Bediener 31 natürlichsprachig statt.

Weiter liegt es im Rahmen der Erfindung, dass die nach Abarbeitung des Dialogmodus 47 oder des Automatikmodus 48 generierten optimierten Arbeitsparameter 46 in einem Datensatz 49 in Analogie zu Datensatz 38 wiederabrufbar und editierbar abgespeichert werden. Im einfachsten Fall ist der Datensatz 49 Bestandteil des bereits beschriebenen Datensatzes 38. In Analogie zu Datensatz 38 kann auch Datensatz 49 personifiziert gespeichert und wiederabgerufen werden.

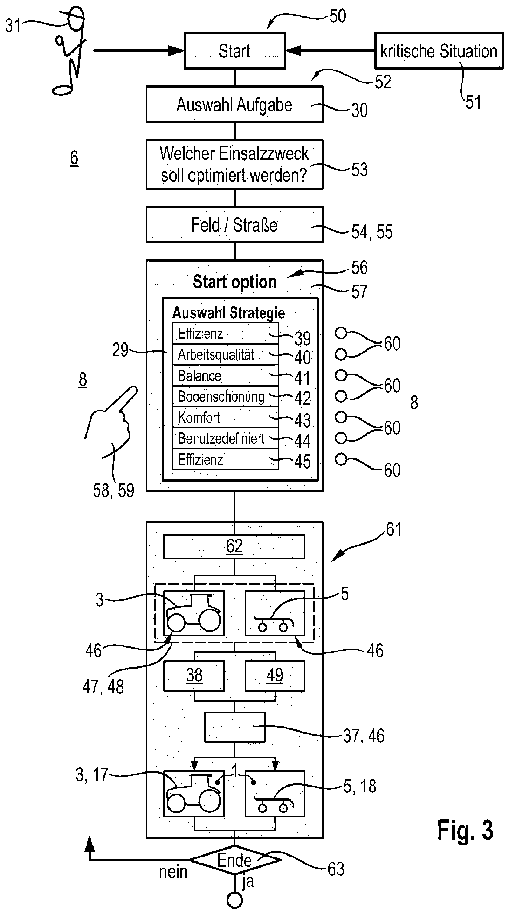

Fig. 3 beschreibt die Arbeitsweise des erfindungsgemäßen Fahrerassistenzsystems 6, insbesondere den Dialog zwischen Bediener 31 und Fahrerassistenzsystem 6 näher. In einem ersten Verfahrensschritt 50 erfolgt die Aktivierung des Fahrerassistenzsystems 6 durch den Bediener 31 oder automatisch bei Identifikation einer kritischen Situation 51.

Im folgenden Schritt 52 wird der Modul "Einsatzzweck" 30 aktiviert, wobei der Bediener 31 die Editierung des Einsatzzwecks 32 bewirkt. Im einfachsten Fall wird das Fahrerassistenzsystem 6 den Bediener 31 die Frage 53 stellen, für welchen der in Figur 2 erläuterten Einsatzzwecke 32 eine Optimierung veranlasst werden soll.

Im folgenden Verfahrensschritt 54 wird ein Modul "Feld/Straße" 55 aktiviert, wobei der Bediener 31 den Einsatz "Feld" oder "Straße" vorgibt oder das Fahrerassistenzsystem 6 den Einsatz selbsttätig erkennt. Im einfachsten Fall kann die automatische Erkennung dadurch bewirkt werden, dass der Maschinenanordnung ein GPS-Sender zugeordnet ist, mittels dessen die Position der Maschinenanordnung 1 bestimmbar ist. Denkbar ist hier auch, dass Position "Straße" oder "Feld" an Hand eines Schwellwertes für die Fahrgeschwindigkeit der Maschinenanordnung, beispielsweise 25 km/h, bestimmt wird, wobei über dem Schwellwert liegende Fahrgeschwindigkeiten als Straßenfahrt identifiziert werden.

Im folgenden Schritt 56 wird ein Modul "Optimierung" 57 gestartet, wobei der Bediener 31 zur Auswahl der Optimierungsstrategie 29, 39-45 aufgefordert wird. Die Auswahl der jeweiligen Optimierungsstrategie 39-45 kann dabei je nach Beschaffenheit der Anzeigeeinheit 8 durch händische Aktivierung 58 auf einem Touchscreen-Monitor 59 oder durch Aktivierung von der jeweiligen Optimierungsstrategie 39-45 zugeordneten Aktivierungstasten 60 erfolgen.

In Abhängigkeit von der ausgewählten Optimierungsstrategie 39-45 wird in einem weiteren Verfahrensschritt 61 eine noch näher zu erläuternden dialoggeführte Optimierung 62 von Arbeitsparametern 46 der Zugmaschine 3 und/oder des an die Zugmaschine 3 adaptierten Anbaugerätes 5 aktiviert. Es liegt im Rahmen der Erfindung, dass zugleich der Betrieb mehrerer, etwa front- und heckseitig sowie seitlich an der Zugmaschine 3 adaptierter Anbaugeräte 5 optimiert wird. Wie bereits beschrieben kann die Optimierung der Arbeitsweise der Zugmaschine 3 und des oder der adaptierten Anbaugeräte 5 in einem Dialogmodus 47 oder in einem Automatikmodus 48 erfolgen. In beiden Fällen werden, wie ebenfalls bereits beschrieben, Datensätze 38, 49 generiert, die optimierte Arbeitsparameter 37, 46 der Arbeitsorgane 17, 18 der Zugmaschine 3 und des oder der Anbaugeräte 5 umfassen. Das erfindungsgemäße Fahrerassistenzsystem 6 kann so beschaffen sein, dass die ermittelten optimierten Arbeitsparameter 37, 46 entweder direkt an dem jeweiligen Arbeitsorgan 17, 18 eingestellt werden, der Bediener 31 gefragt wird, ob die ermittelten Arbeitsparameter 37, 46 eingestellt werden sollen oder nur eine Anzeige der optimierten Arbeitsparameter 37, 46 erfolgt und der Bediener 31 sodann deren Einstellung auslösen muss oder durch Betätigung von Aktoren unmittelbar am Anbaugerät 5 vornimmt.

Der oder die speicherbaren Datensätze (38, 49) können zudem spezifische Datensätze für "Arbeiten auf Feld" und "Straßenfahrt" umfassen, wobei die spezifischen Datensätze (38, 49) für "Arbeiten auf Feld" und "Straßenfahrt" direkt abrufbar sind.

Nach erfolgter Optimierung des Betriebes der Maschinenanordnung 1 wird der Bediener 31 in einem Entscheidungsschritt 63 gefragt, ob die Optimierung beendet werden soll oder nicht. Je nach Entscheidung des Bedieners 31 wird sodann die Optimierung beendet oder das Fahrerassistenzsystem 6 startet von neuem mit Verfahrensschritt 50.

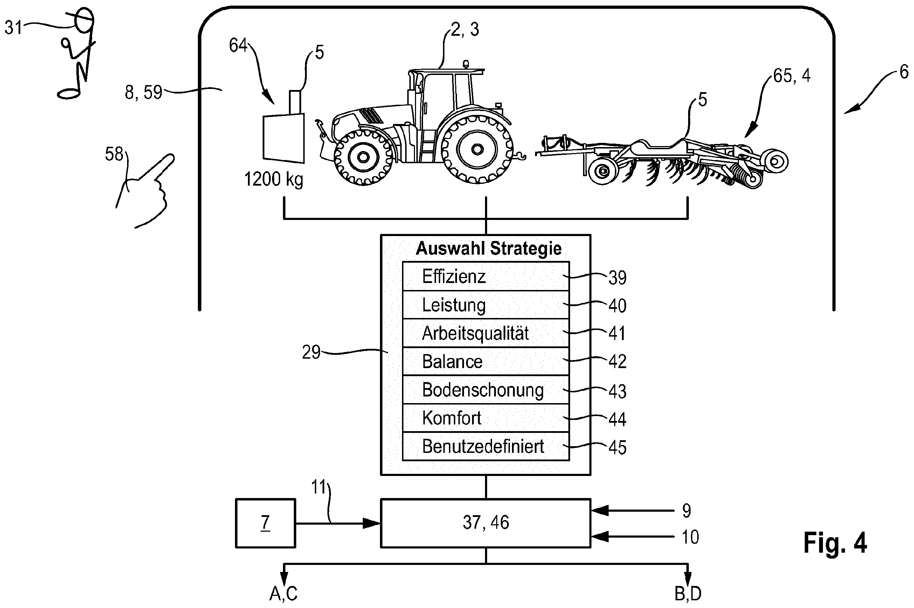

Figur 4 zeigt nun schematisch, wie mittels des erfindungsgemäßen Fahrerassistenzsystems 6 eine Optimierung der verschiedensten Arbeitsparameter 37, 46 der Zugmaschine 3 und des oder der Anbaugeräte 5 vorgenommen wird. Aus Vereinfachungsgründen wird im Folgenden von einer als Touchscreen-Monitor 59 ausgeführten Anzeigeeinheit 8 ausgegangen. Es liegt im Rahmen der Erfindung, dass alle händischen Aktivierungen 58 auch mittels nicht dargestellter Tasten realisierbar sind.

Zunächst kann der Bediener 31 durch händische Aktivierung 58 bestimmen, ob die Arbeitsweise der als Traktor 2 ausgeführten Zugmaschine 3 und/oder der Anbaugeräte 5 optimiert werden soll. Im dargestellten Ausführungsbeispiel sind zwei Arten von Anbaugeräten beispielhaft dargestellt, nämlich ein Frontgewicht 64 und ein als Grubber 65 ausgeführtes Bodenbearbeitungsgerät 4.

Indem das jeweilige Ikon für Traktor 2 und/oder Anbaugerät 5 aktiviert wird öffnet sich das Dialogfeld "Auswahl Strategie" 29 und der Bediener 31 muss die gewünschte Optimierungsstrategie 39-45 auswählen. In Abhängigkeit von der gewählten Optimierungsstrategie 39-45 ermittelt dann das Fahrerassistenzsystem 6 unter Berücksichtigung der verfügbaren von maschineninternen Sensorsystemen generierten Informationen 9 und/oder den verfügbaren externen Informationen 10 und/oder den in der Recheneinheit 7 hinterlegten Informationen 11 optimierte Arbeitsparameter 37, 46 für die Zugmaschine 3 und das oder die Anbaugeräte 5. Wie bereits beschrieben werden die optimierten Arbeitsparameter 37, 46 sodann über entsprechende an den Traktor 2 oder das Anbaugerät 5 zu übermittelnde Steuersignale A-D eingestellt.

Da das Frontgewicht 64 einen originären Bestandteil der als Traktor 2 ausgeführten Zugmaschine 2 bildet, kann die Optimierung des Betriebs der Zugmaschine 2 zugleich die Optimierung der Ballastierung 64 umfassen. In diesem Fall wird ein effiziente Optimierung der Arbeitsparameter 46 mittels des erfindungsgemäßen Fahrerassistenzsystems 6 dann erreicht, wenn die editier- und optimierbaren Arbeitsparameter 46 einen oder mehrere der folgenden Arbeitsparameter 46 umfassen:
die Motordrückung; die Beschleunigung; die Wahl des geeigneten Fahrbereichs sofern der Antrieb der Zugmaschine das Betreiben in Fahrbereichen zulässt; die Fahrgeschwindigkeit und die Vorgabe von Geschwindigkeitswerten für einen an sich bekannten Tempomat; die Aktivierung und Deaktivierung eines Allradantriebs; die Aktivierung und Deaktivierung eines an sich bekannten Differentials; die Reifenstatusbestimmung, einen Vorschlag für eine geeignete Bereifung umfassend; Definition geeigneter Ballastierungsgewichte 64 für Front- und/oder Heckanbau; die Kabinenfederung; die Vorderachsfederung; das Verhalten und die Art der Anbindung des Anbaugerätes 5 an die Zugmaschine 3; Anpassung von Hydraulikeinstellungen, zu verwendende Ventile, erforderliche Ölmenge und Ölförderzeiten; ein optimierter Reifenluftdruck; die Zapfwellendrehzahl; die Art und Ausführung der Zapfwelle; der zu wählende Lenkungsmodus etwa der an sich bekannte Hundegang, Standardlenkung, Rückwärtsfahrt, Lenkung nach GPS - Daten und /oder Fahrprogrammen.

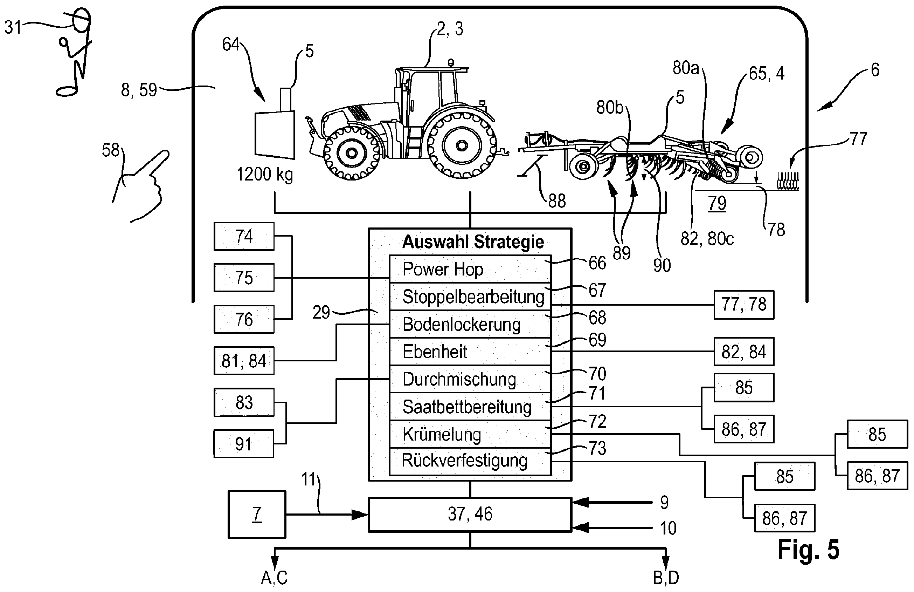

Ist das das Anbaugerät 5 als Bodenbearbeitungsgerät 4, beispielsweise als Grubber 65, ausgeführt kann das erfindungsgemäße Fahrerassistenzsystem 6 in Analogie zu den bereits beschriebenen auswählbaren Optimierungsstrategien 29 "Effizienz" 39, "Leistung" 40, "Arbeitsqualität" 41, "Balance" 42, "Bodenschonung" 43, "Komfort" 44 und "Benutzerdefiniert" 45 alternativ oder zusätzlich eine oder mehrere der in Figur 5 schematisch dargestellten auswählbaren Optimierungsstrategien 29 "Power Hop" 66, "Stoppelbearbeitung" 67, "Bodenlockerung" 68, "Ebenheit" 69, "Durchmischung" 70, "Saatbettbereitung" 71, "Krümelung" 72 und "Rückverfestigung" 73 umfassen.

Gemäß Fig. 5 kann beispielsweise eine der von Bediener 31 gewählten Optimierungsstrategien 29 die Optimierungsstrategie "Power Hop" 66 sein. Bezüglich des Gegenstands der Optimierungsstrategie "Power Hop" 66 wird auf die Patentdokumente DE 10 2014 113 466 und EP 2 818 337 verwiesen, deren Offenbarungsgehalte vollumfänglich Bestandteil der hiesigen Offenbarung werden. Die auswählbare Optimierungsstrategie "Power Hop" 66 reduziert das belastungsabhängige Aufschaukeln der Maschinenanordnung 1, wobei die zu optimierenden Arbeitsparameter 46 einer oder mehrere der folgenden Parameter sind: Reifenluftdruck an einer Vorderachse 74, Reifenluftdruck an einer Hinterachse 75 und die Ballastierung 76.

Mittels der auswählbaren Optimierungsstrategie "Stoppelbearbeitung" 67 kann zumindest die Stoppelhöhe 77 oder der sogenannte Stoppelsturz optimiert werden, wobei die zu optimierenden Arbeitsparameter 46 zumindest die Einstellung eines minimalen Abstandes 78 der die Stoppelhöhe 77 beeinflussenden Werkzeuge 80a zum Boden 79 mit dem Ziel umfassen, dass der Boden 79 so flach wie möglich und ganzflächig bearbeitet wird. Vorzugsweise können derartige Werkzeuge 80 als an sich bekannte und daher nicht näher beschriebene Mulcher ausgeführt sein.

Die auswählbare Optimierungsstrategie "Bodenlockerung" 68 ist auf die Auflockerung des Bodens 79 gerichtet und umfasst als zu optimierenden Arbeitsparameter 46 zumindest die Eindringtiefe 81 der Werkzeuge 80b in den Boden 79. Der wesentliche Effekt dieser Optimierungsstrategie ist, dass eine lockere Bodenstruktur auch in tieferen Bodenschichten gezielt erreicht werden kann.

Mittels der auswählbare Optimierungsstrategie "Ebenheit" 69 kann eine Reduzierung von Bodenunebenheiten durch Vergleichmäßigung der Bodenoberflächenstruktur bewirkt werden, wobei die zu optimierenden Arbeitsparameter 46 beispielsweise das Führen der als sogenannte Sechelemente 82 ausgeführten Werkzeuge 80c über dem Boden 79 und/oder die Einstellung der Werkzeuge 80a-c und/oder die Arbeitsgeschwindigkeit 84 umfassen kann.

Weiter kann die auswählbare Optimierungsstrategie "Durchmischung" 70 eine Optimierung der Durchmischung von Boden und Ernterückständen in verschiedenen Bodentiefen bewirkt, wobei hier die zu optimierenden Arbeitsparameter 46 zumindest die Einstellung des sogenannten Stoppelsturzes 91 und/oder die Arbeitstiefe 83 umfassen.

Die auswählbare Optimierungsstrategie "Saatbettbereitung" 71 bewirkt eine Optimierung der Bodenstruktur für eine Saatbettbereitung in Abhängigkeit von der auszusäenden Fruchtart, wobei hier die zu optimierenden Arbeitsparameter 46 zumindest die Krümelstruktur 85 und/oder die Saatbetttiefe 86 und/oder die Rückverfestigung 87 des Bodens 79 umfassen.

Mittels der auswählbaren Optimierungsstrategie "Krümelung" 72 kann eine Optimierung der Bodenstruktur, insbesondere eine Bodentiefe-abhängige Größe der Bodenbestandteile bewirkt werden, wobei hier die zu optimierenden Arbeitsparameter 46 zumindest die Krümelstruktur 85 und/oder die Saatbetttiefe 86 und/oder die Rückverfestigung 87 des Bodens 79 umfassen.

Die auswählbare Optimierungsstrategie "Rückverfestigung" 73 bewirkt schließlich eine Optimierung der Bodendichte in Abhängigkeit von der Bodentiefen wobei hier die zu optimierenden Arbeitsparameter 46 zumindest die Krümelstruktur 85 und/oder die Saatbetttiefe 86 und/oder die Rückverfestigung 87 des Bodens umfassen.

Eine umfassende Optimierung der Arbeitsweise der Maschinenanordnung 1 ergibt sich zudem dann, wenn die editierbaren Arbeitsparameter 46 des als Grubber 65 ausgeführten Anbaugerätes 5 einer oder mehrere der folgenden Parameter sind: Arbeitstiefe der Werkzeuge 83; Arbeitsbreite 88 des Anbaugerätes 5; die Vorspannung der einem an sich bekannten Dreipunktanbaus zugeordneten Traktionszylindern; die Anzahl und Art der verbauten Werkzeuge 89; die Arbeitsgeschwindigkeit des Anbaugerätes 84; die Einstellung der vorhandenen Werkzeuge 90; die Art der Anhängung des Anbaugerätes 5 an der Zugmaschine 3; Art und Status einer Transporteinrichtung.

**Bezugszeichenliste:**

| | | | |
|---|---|---|---|
| 1 | Maschinenanordnung | 31 | Bediener |
| 2 | Traktor | 32 | Einsatzzweck |
| 3 | Zugmaschine | 33 | Bodenbearbeitung |
| 4 | Bodenbearbeitungsgerät | 34 | Zapfwellenarbeit |
| 5 | Anbaugerät | 35 | Transportarbeit |
| 6 | Fahrerassistenzsystem | 36 | Frontladearbeit |
| 7 | Recheneinheit | 37 | Arbeitsparameter |
| 8 | Anzeigeneinheit | 38 | Datensatz |
| 9 | interne Informationen | 38a | Basisdatensatz |
| 10 | externe Information | 38b | kundenspezifischer Datensatz |
| 11 | hinterlegbare Information | 39 | Effizienz |
| 12 | Steuervorrichtung | 40 | Leistung |
| 13 | Steuervorrichtung | 41 | Arbeitsqualität |
| 14 | Steuereinheit | 42 | Balance |
| 15 | Zugmaschineneinstellautomat | 43 | Bodenschonung |
| 16 | Anbaugeräteeinstellautomat | 44 | Komfort |
| 17 | Arbeitsorgan | 45 | Benutzerdefiniert |
| 18 | Arbeitsorgan | 46 | Arbeitsparameter |
| 19 | Einstellautomat | 47 | Dialogmodus |
| 20 | Regelwerk Traktor | 48 | Automatikmodus |
| 21 | Regelwerk Anbaugerät intern | 49 | Datensatz |
| 22 | Regelwerk Anbaugerät extern | 50 | Verfahrensschritt |
| 23 | Jobrechner | 51 | kritische Situation |
| 24 | Jobrechner | 52 | Verfahrensschritt |
| 25 | Server | 53 | Frage |
| 26 | ISO basierte Steuereinrichtung | 54 | Verfahrensschritt |
| 27 | ISO basierte Steuereinrichtung | 55 | Modul Feld/Straße |
| 28 | Supervisor | 56 | Verfahrensschritt |
| 29 | Optimierungsstrategie | 57 | Modul Optimierung |
| 30 | Modul "Einsatzzweck" | 58 | händische Aktivierung |
| 59 | Touchscreen-Monitor | 89 | Art und Anzahl der Werkzeuge |
| 60 | Aktivierungstaste | 90 | Einstellung der Werkzeuge |
| 61 | Verfahrensschritt | 91 | Stoppelsturz |
| 62 | dialoggeführte Optimierung | | |
| 63 | Entscheidungsschritt | | |
| 64 | Frontgewicht | | |
| 65 | Grubber | | |
| 66 | Power Hop | | |
| 67 | Stoppelbearbeitung | | |
| 68 | Bodenlockerung | | |
| 69 | Ebenheit | | |
| 70 | Durchmischung | | |
| 71 | Saatbettbereitung | | |
| 72 | Krümelung | | |
| 73 | Rückverfestigung | | |
| 74 | Reifenluftdruck Vorderachse | | |
| 75 | Reifenluftdruck Hinterachse | | |
| 76 | Ballastierung | | |
| 77 | Stoppelhöhe | | |
| 78 | minimaler Abstand | | |
| 79 | Boden | | |
| 80a-c | Werkzeug | | |
| 81 | Eindringtiefe | | |
| 82 | Sechelement | | |
| 83 | Arbeitstiefe | A | Steuersignal |
| 84 | Arbeitsgeschwindigkeit | B | Steuersignal |
| 85 | Krümelstruktur | C | Steuersignal |
| 86 | Saatbetttiefe | D | Steuersignal |
| 87 | Rückverfestigung | | |
| 88 | Arbeitsbreite | | |

## Patentansprüche

1. Landwirtschaftliche Maschinenanordnung mit zumindest einer Zugmaschine und zumindest einem an die Zugmaschine adaptierten Anbaugerät und mit einem den Betrieb der Zugmaschine und des jeweiligen Anbaugerätes optimierenden Fahrerassistenzsystem, welches über eine Recheneinheit und zumindest eine Anzeigeeinheit verfügt, wobei die Recheneinheit von maschineninternen Sensorsystemen generierte Informationen, externe Informationen und in der Recheneinheit hinterlegbare Informationen verarbeitet und wobei die Zugmaschine und das zumindest eine Anbaugerät eine Steuervorrichtung zur Steuerung und Regelung der Zugmaschine und des Anbaugerätes umfassen, wobei das Anbaugerät (5) als Bodenbearbeitungsgerät (4) ausgeführt ist,
**dadurch gekennzeichnet,**
**dass** das Fahrerassistenzsystem (6) so strukturiert ist, dass es einen Zugmaschineneinstellautomaten (15) und einen Anbaugeräteinstellautomaten (16) bildet und die jeweiligen Einstellautomaten (15, 16) unabhängig voneinander oder in Abhängigkeit voneinander eine Optimierung der Arbeitsweise der Zugmaschine (3) und des zumindest einen Bodenbearbeitungsgerätes (4) bewirken, wobei der jeweilige Einstellautomat (15, 16) Steuersignale (A, B) generiert, die einer jeweiligen Steuereinheit (12, 13) zugeführt werden und dort jeweils die Ansteuerung bestimmter Arbeitsorgane (17, 18) der Zugmaschine (3) und des Anbaugerätes (5) durch Generierung entsprechender Steuersignale (C, D) bewirken. und wobei das Fahrerassistenzsystem (6) auswählbare Optimierungsstrategien (29) umfasst und die auswählbaren Optimierungsstrategien (29) zugmaschinenspezifische Strategien, anbaugerätspezifische Strategien und/oder eine Kombination aus beiden sind ,

2. Landwirtschaftliche Maschinenanordnung nach Anspruch 1
**dadurch gekennzeichnet, dass** die Optimierung der Arbeitsweise der Zugmaschine (3) und/oder des zumindest einen Bodenbearbeitungsgerätes (4) in Abhängigkeit von der ausgewählten Optimierungsstrategie (29) eine Optimierung (62) von Arbeitsparametern (37, 46) der Zugmaschine (3) und/oder des an die Zugmaschine (3) adaptierten Bodenbearbeitungsgerätes (4) umfasst.

3. Landwirtschaftliche Maschinenanordnung nach einem der Ansprüche 1 und 2
**dadurch gekennzeichnet,**
**dass** die auswählbaren Optimierungsstrategien (29) eine oder mehrere der Optimierungsstrategien "Power Hop" (66), "Stoppelbearbeitung" (67), "Bodenlockerung" (68), "Ebenheit" (69), "Durchmischung" (70), "Saatbettbereitung" (71), "Krümelung" (72) und "Rückverfestigung" (73) umfassen.

4. Landwirtschaftliche Maschinenanordnung nach Anspruch 3
**dadurch gekennzeichnet,**
**dass** die auswählbare Optimierungsstrategie "Power Hop" (66) das belastungsabhängige Aufschaukeln der Maschinenanordnung (1) reduziert und die Arbeitsparameter (46) einer oder mehrere der folgenden Parameter sind:
Reifenluftdruck an einer Vorderachse (74), Reifenluftdruck an einer Hinterachse (75), Ballastierung (76).

5. Landwirtschaftliche Maschinenanordnung nach Anspruch 3
**dadurch gekennzeichnet,**
**dass** die auswählbare Optimierungsstrategie "Stoppelbearbeitung" (67) eine niedrige Stoppelhöhe (77) und/oder eine Einstellung des sogenannten Stoppelsturzes bewirkt und die Arbeitsparameter (46) zumindest die Einstellung eines minimalen Abstandes (78) der Werkzeuge (80a) zum Boden (79) umfassen.

6. Landwirtschaftliche Maschinenanordnung nach Anspruch 3
**dadurch gekennzeichnet,**
**dass** die auswählbare Optimierungsstrategie "Bodenlockerung" (68) eine Auflockerung des Bodens (79) bewirkt und die Arbeitsparameter (46) zumindest die Eindringtiefe (81) der Werkzeuge (80b) in den Boden (79) und/oder die Arbeitsgeschwindigkeit (84) umfassen.

7. Landwirtschaftliche Maschinenanordnung nach Anspruch 3
**dadurch gekennzeichnet,**
**dass** die auswählbare Optimierungsstrategie "Ebenheit" (69) eine Reduzierung von Bodenunebenheiten durch Vergleichmäßigung der Bodenoberflächenstruktur bewirkt und die Arbeitsparameter (46) das Führen der Werkzeuge (80a-c) über den Boden und/oder die Einstellung der Werkzeuge (80a-c) und/oder die Arbeitsgeschwindigkeit (84) umfassen.

8. Landwirtschaftliche Maschinenanordnung nach Anspruch 3
**dadurch gekennzeichnet,**
**dass** die auswählbare Optimierungsstrategie "Durchmischung" (70) eine Optimierung der Durchmischung von Boden und Ernterückständen bewirkt und die Arbeitsparameter (46) zumindest der sogenannte Stoppelsturz (91) und/oder die Arbeitstiefe (83) umfassen.

9. Landwirtschaftliche Maschinenanordnung nach Anspruch 3
**dadurch gekennzeichnet,**
**dass** die auswählbare Optimierungsstrategie "Saatbettbereitung" (71) eine Optimierung der Bodenstruktur für ein Saatbeet in Abhängigkeit von der auszusäenden Fruchtart bewirkt und die Arbeitsparameter zumindest die Krümelstruktur (85) und/oder die Saatbetttiefe (86) und/oder die Rückverfestigung (87) des Bodens (79) umfassen.

10. Landwirtschaftliche Maschinenanordnung nach Anspruch 3
**dadurch gekennzeichnet,**
**dass** die auswählbare Optimierungsstrategie "Krümelung" (72) eine Optimierung der Bodenstruktur, insbesondere eine Bodentiefe-abhängige Größe der Bodenbestandteile bewirkt un die Arbeitsparameter zumindest die Krümelstruktur (85) und/oder die Saatbetttiefe (86) und/oder die Rückverfestigung (87) des Bodens (79) umfassen.

11. Landwirtschaftliche Maschinenanordnung nach Anspruch 3
**dadurch gekennzeichnet,**
**dass** die auswählbare Optimierungsstrategie "Rückverfestigung" (73) eine Optimierung der Bodendichte in Abhängigkeit von der Bodentiefe bewirkt und die Arbeitsparameter zumindest die Rückverfestigung (87) des Bodens (79) umfassen.

12. Landwirtschaftliche Maschinenanordnung nach Anspruch 2
**dadurch gekennzeichnet,**
**dass** die auswählbaren Optimierungsstrategien (29) zusätzlich oder alternativ eine oder mehrere der Strategien "Effizienz" (39), "Leistung" (40), "Arbeitsqualität" (41), "Balance" (42), "Bodenschonung" (43), "Komfort" (44) und/oder "Benutzerdefiniert" (45) umfasst und wobei die Optimierungsstrategie "Effizienz" (39) den Maschinenkraftstoffverbrauch und/oder die Maschinenbetriebsstunden der Maschinenanordnung (1) und/oder die für sogenannte Vorgewendemanöver benötigten Zeit optimiert;
die Optimierungsstrategie "Leistung" (40) auf die Steigerung der bearbeiteten Fläche und/oder verarbeiteten Masse landwirtschaftlicher Güter und/oder der Betriebsstunden der Maschinenanordnung (1) gerichtet ist;
die Optimierungsstrategie "Arbeitsqualität" (41) die Optimierung von Einstellparametern (46) der Zugmaschine (3) und/oder des Bodenbearbeitungsgerätes (5) bewirkt;
die Optimierungsstrategie "Balance" (42) die Einstellung eines variablen Verhältnisses zwischen "Leistung" (40) und "Effizienz" (39) ermöglicht;
die Optimierungsstrategie "Bodenschonung" (43) den von der Maschinenanordnung (1) verursachten Bodendruck und/oder die Bodenverdichtung reduziert und/oder den Reifenluftdruck, die Ballastierung und das Gewicht der Maschinenanordnung, die Art der Bereifungen, den Lenkmodus und/oder den Fahrwerkschlupf optimiert;
die Optimierungsstrategie "Komfort" (44) eine benutzerdefinierte Einstellung des Schwingverhaltens und/oder Beschleunigungsverhaltens und/oder der Lautstärke der Maschinenanordnung (1) bewirkt;
die Optimierungsstrategie "Benutzerdefiniert" (45) das manuelle Verstellen der in den Optimierungsstrategien (29) hinterlegten Parameter ermöglicht.

13. Landwirtschaftliche Maschinenanordnung nach einem der vorhergehenden Ansprüche
**dadurch gekennzeichnet,**
**dass** der Zugmaschineneinstellautomat (15) und der Anbaugeräteinstellautomat (16) einen gemeinsamen Einstellautomaten (19) bilden.

14. Landwirtschaftliche Maschinenanordnung nach Anspruch 13
**dadurch gekennzeichnet,**
**dass** das Fahrerassistenzsystem (6) ein dem Zugmaschineneinstellautomaten (15) zugeordnetes Regelwerk (20) umfasst und wobei das dem Zugmaschineneinstellautomaten (15) zugeordnete Regelwerk (20) eine Optimierung der Arbeitsweise der Zugmaschine (3) unabhängig von der Arbeitsweise des Bodenbearbeitungsgerätes (4) bewirkt, wobei vorzugsweise das dem Zugmaschineneinstellautomaten (15) zugeordnete Regelwerk (21) ein Regelwerk (21) zur Optimierung der Arbeitsweise des Bodenbearbeitungsgerätes (4) umfasst und das Fahrerassistenzsystem (6) die Arbeitsweise der Zugmaschine (3) und/oder des Bodenbearbeitungsgerätes (4) optimiert, wobei insbesondere das Regelwerk (21, 22) zur Optimierung der Arbeitsweise des Bodenbearbeitungsgerätes (4) auf im Zugmaschineneinstellautomaten (15) hinterlegten Regelwerk (21) oder einem von dem Bodenbearbeitungsgerät (4) bereitgestellten Regelwerk (22) basiert.

15. Landwirtschaftliche Maschinenanordnung nach Anspruch 13
**dadurch gekennzeichnet,**
**dass** das Regelwerk (21, 22) zur Optimierung der Arbeitsweise des Bodenbearbeitungsgerätes (4) in einer der Zugmaschine (3) zugeordneten, vorzugsweise als Jobrechner (23) ausgeführten Steuervorrichtung (12) oder einer dem Bodenbearbeitungsgerät (4) zugeordneten, vorzugsweise als Jobrechner (24) ausgeführten Steuereinrichtung (13) hinterlegt ist und die Zugmaschine (3) und das zumindest eine an diesem adaptierte Bodenbearbeitungsgerät (4) ISO-basierte Steuereinrichtungen (26, 27) umfassen und das Fahrerassistenzsystem (6) die von den Steuereinrichtungen (26, 27) gebildeten Einstellautomaten (15, 16) als Supervisor (28) steuert, sodass sich eine Optimierung des gesamten Arbeitsprozesses einstellt.

16. Landwirtschaftliche Maschinenanordnung nach einem der vorhergehenden Ansprüche
**dadurch gekennzeichnet,**
**dass** das Fahrerassistenzsystem (6) einen Modul "Einsatzzweck" (30) umfasst, indem vom Bediener (31) dialoggeführt ein Einsatzzweck (32) bestimmt wird und wobei das Modul "Einsatzzweck" (30) einen oder mehrere der Einsatzzwecke "Bodenbearbeitung" (33), "Zapfwellenarbeit" (34), "Transportarbeit" (35) und "Frontladearbeit" (36) umfassen kann und wobei insbesondere die vom Bediener im Modul "Einsatzzweck" (30) definierten Parameter (37) und die nach Abarbeitung einer Optimierungsstrategie (29) generierten Arbeitsparameter (46) als separate oder gemeinsamer Ergebnisdatensatz (38, 49) gespeichert werden und der oder die Datensätze (38, 49) wiederholt abrufbar und editierbar sind, wobei der oder die Datensätze (38, 49) insbesondere personalisiert speicherbar und wiederabrufbar sind.

17. Landwirtschaftliche Maschinenanordnung nach einem der vorhergehenden Ansprüche
**dadurch gekennzeichnet,**
**dass** der oder die speicherbaren Datensätze (38, 49) spezifische Datensätze für "Arbeiten auf Feld" und "Straßenfahrt" umfassen und die spezifischen Datensätze (38, 49) für "Arbeiten auf Feld" und "Straßenfahrt" direkt abrufbar sind.

18. Landwirtschaftliche Maschinenanordnung nach einem der vorhergehenden Ansprüche
**dadurch gekennzeichnet,**
**dass** der Dialog zwischen Fahrerassistenzsystem (6) und Bediener (31) natürlichsprachig erfolgt.

19. Landwirtschaftliche Maschinenanordnung nach einem der vorhergehenden Ansprüche
**dadurch gekennzeichnet,**
**dass** der Dialog zwischen Fahrerassistenzsystem (6) und Bediener (31) zumindest die Schritte
a) Aktivierung des Fahrerassistenzsystems (6) durch den Bediener (31) oder automatisch bei Identifikation einer kritischen Situation (51)
b.) Aktivierung Modul "Einsatzzweck" (30), wobei der Bediener (31) die Editierung des Einsatzzwecks (32) bewirkt
c.) Aktivierung eines Moduls "Feld/Straße" (55), wobei der Bediener (31) den Einsatz "Feld" oder "Straße" vorgibt oder das Fahrerassistenzsystem (6) den Einsatz selbsttätig erkennt
d.) Start des Moduls "Optimierung" (57), wobei der Bediener (31) zur Auswahl der Optimierungsstrategie (29) aufgefordert wird
e.) in Abhängigkeit von der ausgewählten Optimierungsstrategie (29) Aktivierung einer dialoggeführten Optimierung (62) von Arbeitsparametern (37, 46) der Zugmaschine (3) und/oder des an die Zugmaschine (3) adaptierten Bodenbearbeitungsgerätes (5) umfasst.

## Claims

1. An agricultural machine arrangement comprising at least one tractor and at least one implement adapted to the tractor and a driver assist system which optimises operation of the tractor and the respective implement and which has a computing unit and at least one display unit, wherein the computing unit processes information generated by sensor systems internal to the machine, external information and information which can be stored in the computing unit and wherein the tractor and the at least one implement include a control device for open-loop and closed-loop control of the tractor and the implement, wherein the implement (5) is in the form of a ground working device (4),
**characterised in that**
the driver assist system (6) is of such a structure that it forms an automatic tractor setting means (15) and an automatic implement setting means (16), and the respective automatic setting means (15, 16) independently of each other or in dependence on each other effect optimisation of the mode of operation of the tractor (3) and the at least one ground working device (4), wherein the respective automatic setting means (15, 16) generates control signals (A, B) which are fed to a respective control unit (12, 13) and there respectively cause actuation of given working members (17, 18) of the tractor (3) and the implement (5) by generation of corresponding control signals (C, D), and wherein the driver assist system (6) includes selectable optimisation strategies (29) and the selectable optimisation strategies (29) are tractor-specific strategies, implement-specific strategies and/or a combination of both.

2. An agricultural machine arrangement according to claim 1 **characterised in that** optimisation of the mode of operation of the tractor (3) and/or the at least one ground working device (4) in dependence on the selected optimisation strategy (29) includes optimisation (62) of work parameters (37, 46) of the tractor (3) and/or the ground working device (4) adapted to the tractor (3).

3. An agricultural machine arrangement according to one of claims 1 and 2 **characterised in that** the selectable optimisation strategies (29) include one or more of the optimisation strategies "power hop" (66), "stubble working" (67), "soil loosening" (68), "flatness" (69), "mixing" (70), "seed bed preparation" (71), "soil crumbling" (72) and "reconsolidation" (73).

4. An agricultural machine arrangement according to claim 3 **characterised in that** the selectable optimisation strategy "power hop" (66) reduces the load-dependent pitching of the machine arrangement (1) and the work parameters (46) are one or more of the following parameters: tyre pressure at a front axle (74), tyre pressure at a rear axle (75) and ballasting (76).

5. An agricultural machine arrangement according to claim 3 **characterised in that** the selectable optimisation strategy "stubble working" (67) causes a low stubble height (77) and/or setting of so-called stubble breaking and the work parameters (46) include at least setting a minimum spacing (78) of the tools (80a) relative to the ground (79).

6. An agricultural machine arrangement according to claim 3 **characterised in that** the selectable optimisation strategy "soil loosening" (68) causes loosening of the soil (79) and the work parameters (46) include at least the depth of penetration (81) of the tools (80b) into the ground (79) and/or the working speed (84).

7. An agricultural machine arrangement according to claim 3 **characterised in that** the selectable optimisation strategy "flatness" (69) causes a reduction in the ground unevenness by unifying evening out of the ground surface structure and the work parameters (46) include guiding the tools (80a-c) over the ground and/or setting of the tools (80a-c) and/or the working speed (84).

8. An agricultural machine arrangement according to claim 3 **characterised in that** the selectable optimisation strategy "mixing" (70) causes optimisation of the mixing of soil and crop residues and the work parameters (46) include at least the so-called stubble breaking (91) and/or the working depth (83).

9. An agricultural machine arrangement according to claim 3 **characterised in that** the selectable optimisation strategy "seed bed preparation" (71) causes optimisation of the ground structure for a seed bed in dependence on the kind of crop to be sown and the work parameters include at least the crumble structure (85) and/or the seed bed depth (86) and/or the reconsolidation (87) of the ground (79).

10. An agricultural machine arrangement according to claim 3 **characterised in that** the selectable optimisation strategy "crumbling" (72) causes optimisation of the ground structure, in particular a soil depth-dependent size of the soil constituents and the work parameters include at least the crumble structure (85) and/or the seed bed depth (86) and/or the reconsolidation (87) of the ground (79).

11. An agricultural machine arrangement according to claim 3 **characterised in that** the selectable optimisation strategy "reconsolidation" (73) causes optimisation of the soil density in dependence on the soil depth and the work parameters include at least reconsolidation (87) of the ground (79).

12. An agricultural machine arrangement according to claim 2 **characterised in that** the selectable strategies (29) additionally or alternatively include at least one or more of the strategies "efficiency" (39), "power" (40), "work quality" (41), "balance" (42), "ground conservation" (43), "comfort" (44) and/or "operator defined" (45) and wherein the optimisation strategy "efficiency" (39) optimises the machine fuel consumption and/or the operating hours of the machine arrangement (1), and/or the time required for so-called headland manoeuvres;
the optimisation strategy "power" (40) is directed to increasing the processed area and/or processed mass of agricultural crops and/or the operating hours of the machine arrangement (1);
the optimisation strategy "work quality" (41) implements optimisation of setting parameters (46) of the tractor (3) and/or the ground working device (4);
the optimisation strategy "balance" (42) permits setting a variable ratio between "power" (40) and "efficiency" (39);
the optimisation strategy "ground conservation" (43) reduces the ground pressure caused by the machine arrangement (1) and/or ground compacting and/or optimises the tyre pressure, ballasting and the weight of the machine arrangement, the type of tyres, the steering mode and/or the chassis slip;
the optimisation strategy "comfort" (44) implements a operator-defined setting of the vibration behaviour and/or acceleration behaviour and/or the loudness of the machine arrangement (1); and
the optimisation strategy "operator defined" (45) permits manual adjustment of the parameters contained in the optimisation strategies (29).

13. An agricultural machine arrangement according to one of the preceding claims **characterised in that** the automatic tractor setting means (15) and the automatic implement setting means (16) form a common automatic setting means (19).

14. An agricultural machine arrangement according to claim 13 **characterised in that** the driver assist system (6) includes a closed-loop control device (20) associated with the automatic tractor setting means (15) and wherein the closed-loop control device (20) associated with the automatic tractor setting means (15) causes optimisation of the mode of operation of the tractor (3) independently of the mode of operation of the ground working device (4), wherein preferably the closed-loop control device (21) associated with the automatic tractor setting means (15) includes a closed-loop control device (21) for optimising the mode of operation of the ground working device (5) and the driver assist system (6) optimises the mode of operation of the tractor (3) and/or the ground working device (5), wherein in particular the closed-loop control device (21, 22) for optimising the mode of operation of the ground working device (5) is based on a closed-loop control device (21) disposed in the automatic tractor setting means (15) or a closed-loop control device (22) provided by the respective ground working device.

15. An agricultural machine arrangement according to claim 13 **characterised in that** the closed-loop control device (21, 22) for optimising the mode of operation of the ground working device (5) is disposed in a control device (12) which is associated with the tractor (3) and which is preferably in the form of a job computer (23) or a control device (13) which is associated with the ground working device (5) and which is preferably in the form of a job computer (24) and the tractor (3) and the at least one ground working device (5) adapted thereto include ISO-based control devices (26, 27) and the driver assist system (6) controls the automatic setting means (15, 16) formed by the control devices (26, 27) as a supervisor (28) so that optimisation of the overall working process is implemented.

16. An agricultural machine arrangement according to one of the preceding claims **characterised in that** the driver assist system (6) includes a module "purpose of use" (30) insofar as a purpose of use (32) is determined by the operator (31) using dialog means and wherein the module "purpose of use" (30) can include one or more of the purposes of use "ground working" (33), "power take-off work" (34), "transport work" (35) and "front loading work" (36) and wherein in particular the parameters (37) defined by the operator in the module "purpose of use" (30) and the work parameters (46) generated after execution of an optimisation strategy (29) are stored as a separate or common result data set (38, 49) and the data set or sets (38, 49) are repeatedly retrievable and editable, wherein the data set or sets (38, 49) can be stored and retrieved in particular in personalised fashion.

17. An agricultural machine arrangement according to one of the preceding claims **characterised in that** the storable data set or sets (38, 49) include specific data sets for "work on field" and "road travel" and the specific data sets (38, 49) for "work on field" and "road travel" are directly retrievable.

18. An agricultural machine arrangement according to one of the preceding claims **characterised in that** the dialog between the driver assist system (6) and the operator (31) is effected in natural language.

19. An agricultural machine arrangement according to one of the preceding claims **characterised in that**
the dialog between the driver assist system (6) and the operator (31) includes at least the steps:
a) activation of the driver assist system (6) by the operator (31) or automatically upon identification of a critical situation (51),
b) activation of a module "purpose of use" (30), wherein the operator (31) effects editing of the purpose of use (32),
c) activation of a module "field/road" (55), wherein the operator (31) presets the use "field" or "road" or the driver assist system (6) automatically recognises the use,
d) starting of the module "optimisation" (57), wherein the operator (31) is required to select the optimisation strategy (29), and
e) in dependence on the selected optimisation strategy (29) activation of a dialog-controlled optimisation (62) of work parameters (37, 46) of the tractor (3) and/or the ground working device (4) adapted to the tractor (3).

## Revendications

1. Agencement de machines agricoles comprenant au moins une machine de traction et au moins un outil rapporté adapté à la machine de traction et comprenant un système d'assistance au conducteur qui optimise le fonctionnement de la machine de traction et de l'outil rapporté respectif et qui dispose d'une unité de calcul et d'au moins une unité d'affichage, l'unité de calcul traitant des informations générées par des systèmes de capteurs internes aux machines, des informations externes et des informations mémorisables dans l'unité de calcul, et la machine de traction et le au moins un outil rapporté comprenant un dispositif de commande pour commander et réguler la machine de traction et l'outil rapporté, l'outil rapporté (5) étant conformé en outil de travail du sol (4), **caractérisé en ce que** le système d'assistance au conducteur (6) est structuré de façon à former un automate de réglage de machine de traction (15) et/ou l'automate de réglage d'outil rapporté (16), et les automates de réglage respectifs (15, 16) effectuent indépendamment l'un de l'autre ou de manière dépendante l'un de l'autre une optimisation du mode de travail de la machine de traction (3) et du au moins un outil de travail du sol (4), l'automate de réglage d'outil respectif (15, 16) générant des signaux de commande (A, B) qui sont envoyés à une unité de commande respective (12, 13) et y provoquent respectivement la mise en action d'organes de travail déterminés (17, 18) de la machine de traction (3) et de l'outil rapporté (5) en générant des signaux de commande correspondants (C, D), et le système d'assistance au conducteur (6) comprenant des stratégies d'optimisation sélectionnables (29), les stratégies d'optimisation sélectionnables (29) étant des stratégies spécifiques à la machine de traction, des stratégies spécifiques à l'outil rapporté et/ou une combinaison des deux.

2. Agencement de machines agricoles selon la revendication 1, **caractérisé en ce que** l'optimisation du mode de travail de la machine de traction (3) et/ou du au moins un outil de travail du sol (4) en fonction de la stratégie d'optimisation sélectionnée (29) comprend une optimisation (62) de paramètres de travail (37, 46) de la machine de traction (3) et/ou de l'outil de travail du sol (4) adapté à la machine de traction (3).

3. Agencement de machines agricoles selon une des revendications 1 et 2, **caractérisé en ce que** les stratégies d'optimisation sélectionnables (29) comprennent une ou plusieurs des stratégies d'optimisation « Power Hop » (66), « traitement du chaume » (67), « ameublissement du sol » (68), « planéité » (69), « mélange » (70), « préparation du lit de semis » (71), « émiettement » (72) et « rappuyage » (73).

4. Agencement de machines agricoles selon la revendication 3, **caractérisé en ce que** la stratégie d'optimisation sélectionnable « Power Hop » (66) réduit le balancement de l'agencement de machines (1) dû à la charge, et les paramètres de travail (46) sont un ou plusieurs des paramètres suivants : pression d'air des pneumatiques sur un essieu avant (74), pression d'air des pneumatiques sur un essieu arrière (75), lestage (76).

5. Agencement de machines agricoles selon la revendication 3, **caractérisé en ce que** la stratégie d'optimisation sélectionnable « traitement du chaume » (67) assure une hauteur de chaume réduite (77) et/ou un réglage du « déchaumage », et les paramètres de travail (46) comprennent au moins le réglage d'un écartement minimal (78) des outils (80a) par rapport au sol (79).

6. Agencement de machines agricoles selon la revendication 3, **caractérisé en ce que** la stratégie d'optimisation sélectionnable « ameublissement du sol » (68) assure un ameublissement du sol (79), et les paramètres de travail (46) comprennent au moins la profondeur de pénétration (81) des outils (80b) dans le sol (79) et/ou la vitesse de travail (84).

7. Agencement de machines agricoles selon la revendication 3, **caractérisé en ce que** la stratégie d'optimisation sélectionnable « planéité » (69) assure une réduction des irrégularités du sol par une uniformisation de la structure superficielle du sol, et les paramètres de travail (46) comprennent le guidage des outils (80a-c) sur le sol et/ou le réglage des outils (80a-c) et/ou la vitesse de travail (84).

8. Agencement de machines agricoles selon la revendication 3, **caractérisé en ce que** la stratégie d'optimisation sélectionnable « mélange » (70) assure une optimisation du mélange du sol et des résidus de récolte, et les paramètres de travail (46) comprennent au moins le « déchaumage » (91) et/ou la profondeur de travail (83).

9. Agencement de machines agricoles selon la revendication 3, **caractérisé en ce que** la stratégie d'optimisation sélectionnable « préparation du lit de semis » (71) assure une optimisation de la structure du sol pour un lit de semis en fonction du type de produit à semer, et les paramètres de travail comprennent au moins la structure grumeleuse (85) et/ou la profondeur du lit de semis (86) et/ou le rappuyage (87) du sol (79).

10. Agencement de machines agricoles selon la revendication 3, **caractérisé en ce que** la stratégie d'optimisation sélectionnable « émiettement » (72) assure une optimisation de la structure du sol, en particulier une dimension des composants du sol dépendant de la profondeur du sol, et les paramètres de travail comprennent au moins la structure grumeleuse (85) et/ou la profondeur de lit de semis (86) et/ou le rappuyage (87) du sol (79).

11. Agencement de machines agricoles selon la revendication 3, **caractérisé en ce que** la stratégie d'optimisation sélectionnable « rappuyage » (73) assure une optimisation de la densité du sol en fonction de la profondeur du sol, et les paramètres de travail comprennent au moins le rappuyage (87) du sol (79).

12. Agencement de machines agricoles selon la revendication 2, **caractérisé en ce que** les stratégies d'optimisation sélectionnables (29) comprennent à titre de complément ou de remplacement une ou plusieurs des stratégies « efficience » (39), « puissance » (40), « qualité du travail » (41), « équilibre » (42), « préservation du sol » (43), « confort » (44) et/ou « définie par l'utilisateur » (45), et la stratégie d'optimisation « efficience » (39) optimise la consommation de carburant des machines et/ou les heures de fonctionnement des machines de l'agencement de machines (1) et/ou le temps nécessaire aux « manœuvres en bout de champ » ; la stratégie d'optimisation « puissance » (40) vise à accroître la surface travaillée et/ou la masse travaillée de produits agricoles et/ou les heures de fonctionnement de l'agencement de machines (1) ; la stratégie d'optimisation « qualité du travail » (41) permet d'optimiser des paramètres de réglage (46) de la machine de traction (3) et/ou de l'outil de travail du sol (5) ; la stratégie d'optimisation « équilibre » (42) permet de régler un rapport variable entre « puissance » (40) et « efficience » (39) ; la stratégie d'optimisation « préservation du sol » (43) réduit la pression au sol provoquée par l'agencement de machines (1) et/ou le compactage du sol et/ou optimise la pression d'air des pneumatiques, le lestage et le poids de l'agencement de machines, le type de pneumatiques, le mode de conduite et/ou le patinage du train de roulement ; la stratégie d'optimisation « confort » (44) effectue un réglage, défini par l'utilisateur, du comportement vibratoire et/ou du comportement à l'accélération et/ou du niveau sonore de l'agencement de machines (1) ; la stratégie d'optimisation « définie par l'utilisateur » (45) permet de régler manuellement les paramètres mémorisés dans les stratégies d'optimisation (29).

13. Agencement de machines agricoles selon une des revendications précédentes, **caractérisé en ce que** l'automate de réglage de machine de traction (15) et l'automate de réglage d'outil rapporté (16) forment un automate de réglage commun (19).

14. Agencement de machines agricoles selon la revendication 13, **caractérisé en ce que** le système d'assistance au conducteur (6) comprend une base de règles (20) associée à l'automate de réglage de machine de traction (15), et la base de règles (20) associée à l'automate de réglage de machine de traction (15) effectuant une optimisation du mode de travail de la machine de traction (3) indépendamment du mode de travail de l'outil de travail du sol (4), et de préférence la base de règles (21) associée à l'automate de réglage de machine de traction (15) comprenant une base de règles (21) pour optimiser le mode de travail de l'outil de travail du sol (4), et le système d'assistance au conducteur (6) optimisant le mode de travail de la machine de traction (3) et/ou de l'outil de travail du sol (4), en particulier la base de règles (21, 22) destinée à optimiser le mode de travail de l'outil de travail du sol (4) étant basée sur une base de règles (21) mémorisée dans l'automate de réglage de machine de traction (15) ou sur une base de règles (22) fournie par l'outil de travail du sol (4).

15. Agencement de machines agricoles selon la revendication 13, **caractérisé en ce que** la base de règles (21, 22) destinée à optimiser le mode de travail de l'outil de travail du sol (4) est mémorisée dans un dispositif de commande (12) associé à la machine de traction (3), de préférence conformé en calculateur de tâches (23), ou dans un équipement de commande (13) associé à l'outil de travail du sol (4), de préférence conformé en calculateur de tâches (24), et la machine de traction (3) et le au moins un outil de travail du sol (4) adapté à celle-ci comprennent des équipements de commande à base ISO (26, 27), et le système d'assistance au conducteur (6) commande, en tant que superviseur (28), les automates de réglage (15, 16) formés par les équipements de commande (26, 27), ce qui a pour effet d'optimiser l'ensemble du processus de travail.

16. Agencement de machines agricoles selon une des revendications précédentes, **caractérisé en ce que** le système d'assistance au conducteur (6) comprend un module « type d'application » (30) dans lequel un type d'application (32) est déterminé par l'utilisateur (31) guidé par un dialogue, le module « type d'application » (30) pouvant comprendre un ou plusieurs des types d'application « travail du sol » (33), « travail à l'arbre de prise de force » (34), « travail de transport » (35) et « travail de chargement frontal » (36), et en particulier les paramètres (37) définis par l'utilisateur dans le module « type d'application » (30) et les paramètres de travail (46) générés après exécution d'une stratégie d'optimisation (29) sont mémorisés sous la forme d'un ensemble de données résultantes séparé ou commun (38, 39), et le ou les ensembles de données (38, 49) peuvent être consultés et modifiés de manière répétée, le ou les ensembles de données (38, 49) étant mémorisables et consultables en particulier de manière personnalisée.

17. Agencement de machines agricoles selon une des revendications précédentes, **caractérisé en ce que** le ou les ensembles de données mémorisables (38, 49) comprennent des ensembles de données spécifiques pour « travaux en champ » et « trajet sur route », et les ensembles de données spécifiques (38, 49) pour « travaux en champ » et « trajet sur route » sont consultables directement.

18. Agencement de machines agricoles selon une des revendications précédentes, **caractérisé en ce que** le dialogue entre le système d'assistance au conducteur (6) et l'utilisateur (31) s'effectue en langue naturelle.

19. Agencement de machines agricoles selon une des revendications précédentes, **caractérisé en ce que** le dialogue entre le système d'assistance au conducteur (6) et l'utilisateur (31) comprend au moins les étapes
a) d'activation du système d'assistance au conducteur (6) par l'utilisateur (31) ou automatiquement lors de l'identification d'une situation critique (51)
b) d'activation du module « type d'application » (30), l'utilisateur (31) effectuant la modification du type d'application (32)
c) d'activation d'un module « champ/route » (55), l'utilisateur (31) prescrivant l'utilisation « champ » ou « route », ou le système d'assistance au conducteur (6) reconnaissant automatiquement l'utilisation
d) de démarrage du module « optimisation » (57), l'utilisateur (31) étant invité à choisir la stratégie d'optimisation (29)
e) en fonction de la stratégie d'optimisation choisie (29), d'activation d'une optimisation guidée par dialogue (62) de paramètres de travail (37, 46) de la machine de traction (3) et/ou de l'outil de travail du sol (5) adapté à la machine de traction (3).
